# EUROPÄISCHE PATENTANMELDUNG

(11) **EP 1 236 845 A1**
(43) Veröffentlichungstag der Anmeldung: **04.09.2002**
(21) Anmeldenummer: 02450029.0
(22) Anmeldetag: 11.02.2002
(51) Int. Cl.: E04G 21/32

(54) **Absturzsicherungssystem**

(30) Priorität: 19.02.2001 AT 2512001
(71) Anmelder: Kurz, Gerald, 2283 Obersiebenbrunn (AT)
(72) Erfinder: Kurz, Gerald, 2283 Obersiebenbrunn (AT)

(57) **Zusammenfassung**

Das multifunktionelle Sicherungssystem besteht aus zwei Halteschuhen (1), welche an einer Befestigungsunterlage, wie z.B. einem Dachsparren (3) mittels Befestigungselementen (5) angebracht werden, und einem Dachquerriegel (2), der horizontal mittels einer Querriegelführung (4) in der Richtung eingestellt und durch eine Gewindeschraube (6) in frei wählbarer Lage fixiert wird. Auf dem Dachquerrriegel sind eine oder mehrere Durchgangsstützen (7) montiert, an welchen mittels Ösen bzw. Seilkauschen (8) im Bedarfsfall ein Sicherungsseil (10) und/oder ein Blitzschutzseil (9) angebracht werden.

## Beschreibung

Die vorliegende Erfindung betrifft ein multifuktionelles Sicherungssystem für Dächer. Dieses Sicherungssystem soll die speziellen Anforderungen, welche durch technische und/oder legislative Vorgaben festgelegt werden, sowohl in konstruktiver Einfachheit als auch in sicherheitstechnischer Zuverlässigkeit erfüllen.

Sicherungssysteme, welche im allgemeinen Hochbau bzw. in verwandten Anwendungsgebieten zum Einsatz kommen, dienen unter anderem zum Personenschutz bei der Errichtung von Bauten oder bei der Gebäudeerhaltung. In beiden Fällen ist primär der Schutz vor unbeabsichtigtem Absturz der mit den erwähnten Tätigkeiten beschäftigten Personen im Vordergrund, daneben ist auch die Erleichterung von körperlichen Tätigkeiten sowie die Minderung von baulichen Schäden ein Ziel von Sicherungssystemen.

Eine der wesentlichsten geforderten Eigenschaften von Sicherungssystemen im Hochbau und verwandten Anwendungsgebieten ist die der Flexibiltät bei räumlicher Anwendung bei möglichst hoher statischer und/oder mechanischer Belastbarkeit.

Wenn bei Arbeiten an absturzgefährdeten Stellen durch Geländer, Abdeckungen, Umwehrungen, Brüstungen oder ähnliches kein ausreichender Schutz vor Absturz von Personen gewährleistet werden kann, so sind laut vieler einschlägiger Vorschriften Haltegurten oder Auffanggurten einschließlich der zugehörigen Ausrüstung und Verbindungsmittel wie Sicherungsseile, Karabinerhaken, Falldämpfer oder Seilkürzer einzusetzen. Die entsprechenden Fixierungspunkte sind je nach Art der Tätigkeit der mit den Arbeiten betrauten Personen möglichst nahe dem Tätigkeitsbereich festzulegen, ohne dass jedoch die Arbeiten dabei behindert werden.

Im Allgemeinen werden diese Auflagen durch fixe Befestigungselemente, die an vorgegebenen Punkten angebracht sind, und durch fest verlegte Seile erfüllt. Nachteilig sind dabei jedoch weite Distanzen der Fixpunkte, die zu statischen Problemen führen können, oder die durch die Bauweise nicht mehr veränderbare Lage der Fixpunkte, die meist durch den Sparrenabstand bestimmt wird.

Praktische Problemlösungen, die die oben angeführten Gesichtpunkte zumindest teilweise berücksichtigen, werden beispielsweise in der deutschen Patentschrift 32 01 582 angeführt. Hier wird eine Vorrichtung von auf Dächern, insbesondere auf Flachdächern, arbeitenden Personen gegen Absturz, bestehend aus in der Dachkonstruktion in vorgegebenen Abständen verankerten Sicherungspfosten und einem an die Sicherungspfosten unmittelbar oder unter Zwischenschaltung eines Sicherungsseiles anschließbaren Anseilgeschirr, vorgestellt. Ein solches Anseilgeschirr weist regelmäßig einen Auffanggurt, ein Sicherheitsseil mit einem Falldämpfer und einem Seilverkürzer auf. Die Sicherungspfosten sind in Art von Gliederpfosten mit einem vorgebenen Soll-Biegemoment ausgestattet.

Die deutsche Offenlegungsschrift 39 31 435 beschreibt einen Sicherheitsdachhaken zum Einhaken einer Leiter mit einer angebrachten Öse zum Einhängen der Auffangvorrichtung einer Fallsicherung. Dieser Sicherheitsdachhaken ist an einer stärkeren Dachlatte als die normalen Dachlatten angebracht. Eine flexible Verbindung, entweder durch Kette oder Seil, besteht zum nächstgelegenen Dachsparren.

Durch die WO 94/28268 wurde ein Ankerhaken in verschiedenen Ausführungen für den Gebrauch auf Dächern bekannt gemacht. Diese gegenständliche Ankervorrichtung kann sowohl als Befestigung von Leitern, von Tritt- bzw. Arbeitsbrettern als auch zur Befestigung von Halterungen von Sicherheitsseilen, an die sich wiederum Personen mittels geeigneter Absturzsicherungen anhängen können, dienen.

Alle in den oben angeführten Schutzrechten beschriebenen Sicherungseinrichtungen sind an durch die Bauweise bzw. durch die Konstruktion des Dachtragwerkes festgelegten Haltepunkte gebunden oder daran, dass, wie im Falle der DE 39 31 435, schon vor der endgültigen Fertigstellung der Dachhaut eine besondere Dachlattenausführung vorgesehen werden muss.

Ebenso benötigen die beschriebenen Sicherheitsvorkehrungen aus Gründen der Statik Dachsparren, wobei wiederum die bauseits vorgegebenen Abstände der Sparren voneinander massive statische Probleme aufwerfen können. Darüber hinaus kann bei den bekannten Sicherheitseinrichtungen auf Formen und Materialarten der Dacheindeckung sehr schwer Rücksicht genommen werden.

Eine weitere bekannte technische Lösung, die aus einem durch fixe Befestigungselemente installierten Sicherungsseil mit entsprechenden Anhängevorrichtungen, welche dauernd am Sicherungsseil befestigt sind, besteht, ist vornehmlich für Flachdächer bzw. für konstruktiv ähnliche Bauwerksteile geeignet. Technische Variationen dieser Problemlösung können nur begrenzt veränderlichen statischen Vorgaben und unterschiedlichen Baumaterialformen genügen.

Außerdem werden wärmetechnische Aspekte bei den bekannten Systemen außer Acht gelassen, wodurch es einerseits zu Korrosionsproblemen und andererseits zu negativen klimatischen Auswirkungen in den Bereichen Dachhaut, Dachzwischenraum und Dachisolierung kommen kann.

Der gegenständlichen Erfindung liegt daher die Aufgabe zugrunde, ein Sicherungssystem zu schaffen, durch das einerseits die Nachteile, wie sie durch die oben beschriebenen Ausführungen auftreten, eliminiert werden und andererseits den legislativ vorgeschriebenen Anforderungen zur Sicherheit der bei Arbeiten auf Dächern beschäftigten Personen nachgekommen wird.

Das erfindungsgemäße Sicherheitssystem besteht aus einem Dachquerriegel, der zwischen zwei Haltevorrichtungen, welche ohne Durchschraubungen auf Gebäudefixpunkten, bevorzugterweise auf Dachsparren, horizontal frei verschiebbar ist und nach Festlegung der Fixpunkte festgeklemmt wird und aus einem oder mehreren auf diesem Dachquerriegel befestigten Dachdurchgangsstützen besteht, welche Ösen bzw. Seilkautschen zum Befestigen von Sicherungsseilen und/oder Blitzschutzleitungen tragen.

Überraschenderweise hat sich herausgestellt, dass durch die gegenständliche Ausführung erstens auch die Anforderungen eines Blitzschutzes optimal löst werden und zweitens Wärmebrücken durch Vermeidung von Durchschraubungen verhindert werden sowie die Dichtheit des Unterdaches bzw. der Unterspannung gewährleistet wird.

Ebenso wird durch das erfindungsgemäße Sicherheitssystem eine einfache Aufdachmontage über dem sogenannten Unterdach, gegebenenfalls auch im Nachhinein, möglich. Durch das geringe Gewicht der vorgesehenen Konstruktion werden statische Probleme vermieden, wobei trotzdem die 100%ige Absturzsicherung neben einem optimalen Sicherungsfreiraum über die gesamte zu sichernde Problemfläche, auch über ein Raster bis zu 4 m Fixpunktabständen, gewährleistet wird. Neben der Inspektionsmöglichkeit durch einfaches Aushängen einzelner Dachsteine bzw. -ziegel kann eine Mehrfachfunktion durch Einbau von handelsüblichen Dachdurchgangssteinen oder - ziegeln erreicht werden.

Das erfindungsgemäße System wird wie folgt beschrieben.

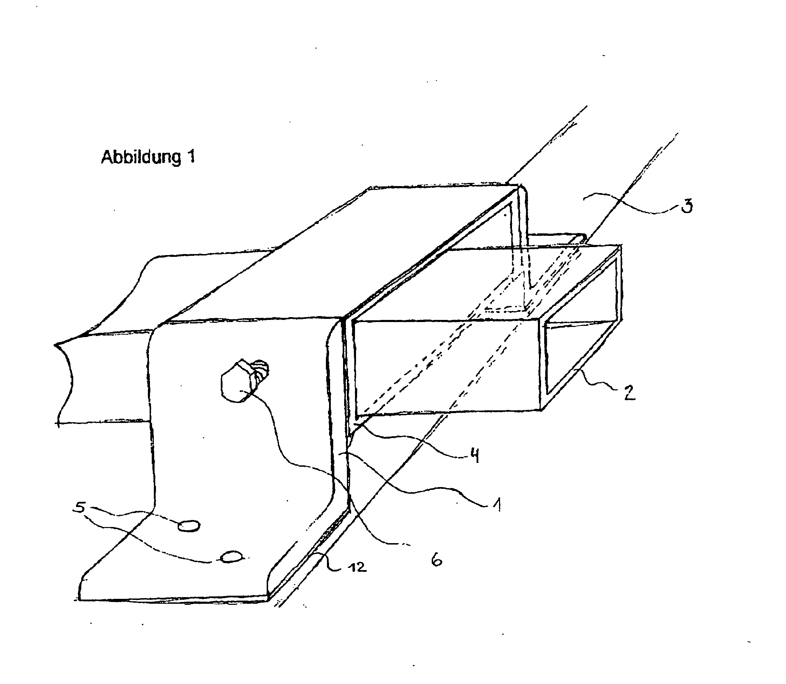

Die **Abbildung 1** zeigt in Schrägansicht einen der beiden Befestigungsteile der erfindugsgemäßen Sicherheitsvorrichtung. Ein Halteschuh (1) wird durch Befestigungselemente (5) an die entsprechende Befestigungsunterlage, wie z.B. einen Dachsparren (3) unter Verwendung einer Dichtungzwischenlage, die beidseitig klebend ist (12), verbunden. Im dachzugewandten Raum des Halteschuhs (1) befindet sich eine integrierte Dachquerriegelführung (4), durch die und durch den Halteschuh (1) eine durch ein entsprechendes Gewinde gehaltene Fixierschraube (6) hindurchgeführt wird. Durch diese Fixierschraube (6) wird je nach Bedarf ein Dachquerriegel (2) gehalten, der quer zur Dachsparrenrichtung frei,begrenzt durch die Lage der Durchgangsstütze -, je nach baulicher oder statischer Anforderung, verschiebbar ist.

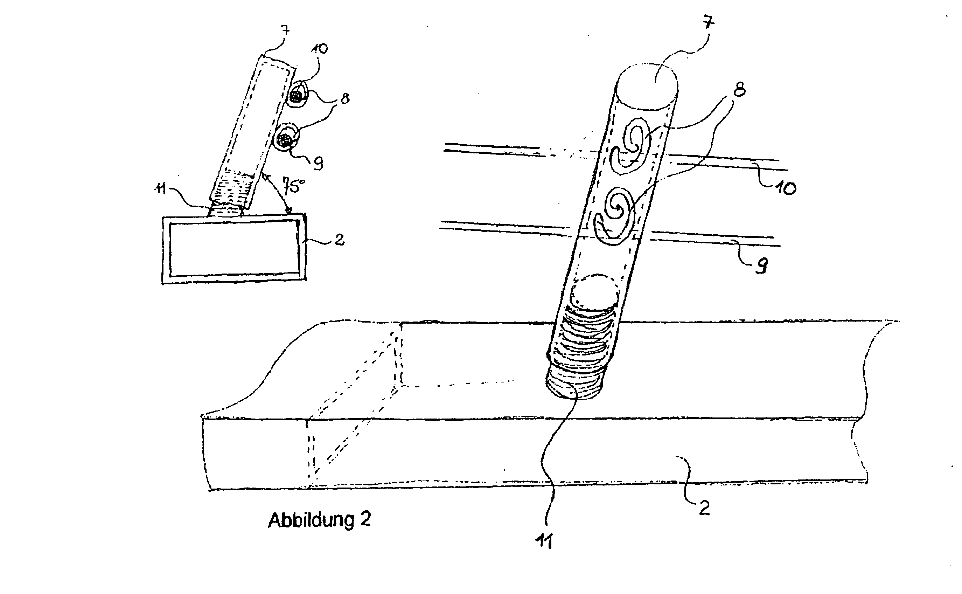

Die zur Erfüllung der erfindungsgemäßen Ausführung weiters notwendige Durchgangsstütze wird in **Abbildung 2** gezeigt. Auf einem auf dem Querriegel (2) unter einem bestimmten Winkel angebrachten Befestigungsdom (11), der ein Außengewinde trägt, kann eine Durchgangsstütze (7), die als oben geschlossenes Rohr ausgeführt ist, befestigt werden. An der offenen Innenseite ist ein zum Gewinde des Befestigungsdornes (7) passendes Innengewinde vorgesehen, welches einerseits einen sicheren Halt und andererseits eine vertikale Distanzanpassung der Durchgangsstütze (7) ermöglicht.
An der Durchgangsstütze sind eine oder mehrere Ösen (8) oder Vorrichtungen mit dem gleichen mechanisch-technischen Zweck angebracht, durch welche beispielsweise ein Sicherungsseil (10) oder auch ein metallischer, flexibler Blitzableiter (9) montiert werden kann.

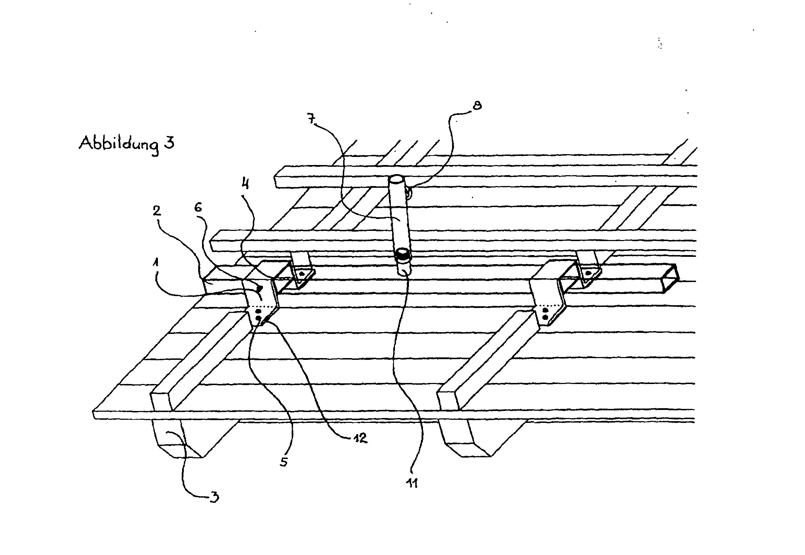

Die **Abbildung 3 als Hauptzeichnung** stellt als Übersicht das gegenständliche erfindungsgemäße Absturzsicherungssystem dar.

## Patentansprüche

1. Multifuktionelles Sicherungssystem gegen unbeabsichtigtes Abstürzen von Personen von erhöhten Standplätzen, vorzugsweise von Dächern von Bauwerken **dadurch gekennzeichnet, dass** Fixierungspunkte für Sicherungsseile in Form von Durchgangsstützen (7), welche auf einem, zwischen zwei Dachsparren (3) horizontal verschiebbaren Dachquerriegel (2) befestigt sind, gebildet werden.

2. Multifunktionelles Sicherungssystem nach Anspruch 1, **dadurch gekennzeichnet, dass** die horizontal verschiebbaren Dachquerriegel (2 )mittels einer in einem Halteschuh (1) integrierten Führung (4) und einer Fixierschraube (6) in beliebiger, durch die Lage der Durchgangsstütze (7) begrenzten Position, fixierbar sind.

3. Multifuktionelles Sicherungssystem nach Anspruch 1 **dadurch gekennzeichnet, dass** die als Fixierungspunkte verwendeten Durchgangsstützen (7) mit Ösen bzw.Seilkauschen (8) versehen sind.

4. Multifuktionelles Sicherungssystem nach Anspruch 2, **dadurch gekennzeichnet, dass** zwischen der Befestigungsunterlage (3) und dem Halteschuh (1) eine Dichtungszwischenlage (12), vorzugsweise beidseitig klebend, vorgesehen ist.

5. Multifuktionelles Sicherungssystem nach Anspruch 1, **dadurch gekennzeichnet, dass** die Durchgangsstütze (7) einen beliebigen Winkel, vorzugsweise 75°, zwischen der Dachebene und der Waagerechten einnimmt.

6. Multifunktionelles Sicherungssystem nach Ansprüchen 1 bis 3, **dadurch gekennzeichnet, dass** die einzelnen Bauteile aus Metall, vorzugsweise aus Stahl, bestehen.

7. Multifunktionelles Sicherungssystem nach Ansprüchen 1 bis 3, **dadurch gekennzeichnet, dass** die einzelnen Bauteile aus einem Material, dessen mechanische und physikalische Eigenschaften dem des Stahles ebenbürtig sind, wie vorzugsweise glasfaserverstärkte Kunststoff - oder Kohlefaserwerkstoffe, bestehen.
